# EUROPEAN PATENT APPLICATION

(11) **EP 4 464 407 A1**
(43) Date of publication of application: **20.11.2024**
(21) Application number: 24174948.0
(22) Date of filing: 08.05.2024
(51) Int. Cl.: B01F 23/53, B01F 23/50, B01F 27/091, B01F 27/13, B01F 27/95, B01F 35/12

(54) **SLURRY MIXER**

(30) Priority: 12.05.2023 KR 20230061915
(71) Applicant: Samsung SDI Co., Ltd., Yongin-si, Gyeonggi-do 17084 (KR)
(72) Inventor: YUN, Gayeong, 17084 Yongin-si (KR)
(74) Representative: Michalski Hüttermann & Partner Patentanwälte mbB

(57) **Abstract**

Provided is a slurry mixer. The slurry mixer includes a container (10) configured to receive a slurry including liquid material and powdered material, a lid (20) configured to cover the container, a first agitator (30) coupled to the lid, and configured to rotate to mix the slurry, a second agitator (40) coupled to the lid at one side of the first agitator, and configured to rotate or revolve to mix the slurry, and a scraper (50) coupled to a rotary shaft of a rotor for operating the second agitator, and configured to contact a lower surface of the lid.

## Description

### BACKGROUND

### 1. Field

The present disclosure relates to a slurry mixer configured to mix a slurry containing a mixture of liquid materials and powdered materials.

### 2. Description of the Related Art

To manufacture a slurry for an electrode of a secondary battery, a mixture of liquid and powdered materials including active materials, conductive materials, binders, and solvents is desirably physically and substantially uniformly distributed and mixed. The material mixture forms a slurry mixture that has material properties so that the slurry mixture is used for the slurry for an electrode. The slurry mixture has fluidity and viscosity suitable for coating.

For example, a slurry mixer uses both low-speed and high-speed agitators that agitate the material mixture in a container. In case that the materials of the material mixture are inputted into the container, the inputted materials of the material mixture may be spattered inside the container because of the slurry or liquid materials existing in the container. The materials of the material mixture are attached to a lower surface of a lid that covers the container.

In case that the slurry or liquid material attached to the lid is left unattended, a composition of the slurry may be different from that set in the recipe. To reduce or remove this risk, operators may manually scrape the lid, the convenience for the operators is reduced, and there may be a deviation in amount of scraping between the operators. For this reason, the uniformity of the composition of the active material may deteriorate.

### SUMMARY

The present disclosure attempts to provide a slurry mixer capable of ensuring substantial uniformity of a composition of a slurry containing a material mixture of liquid materials and powdered materials.

The present disclosure also attempts to provide a slurry mixer capable of ensuring substantial uniformity of a composition of an active material.

One or more embodiments of the present disclosure provides a slurry mixer including a container configured to receive a slurry including liquid material and powdered material, a lid configured to cover the container, a first agitator coupled to the lid, and configured to rotate to mix the slurry, a second agitator coupled to the lid at one side of the first agitator, and configured to rotate or revolve to mix the slurry, and a scraper coupled to a rotary shaft of a rotor for operating the second agitator, and configured to contact a lower surface of the lid.

The first agitator may be coupled to a first agitation rotor at a center of the lid.

The second agitator may include a pair of first and second planet blades.

The first and second planet blades may be respectively coupled to first and second planet rotors symmetrically located at respective opposite sides of the lid based with the first agitation rotor therebetween.

The scraper may include a pair of scrapers respectively coupled to a rotary shaft of the first planet rotor and to a rotary shaft of the second planet rotor.

A length of each of the scrapers may be less than a first distance between the rotary shaft of the first planet rotor and a rotary shaft of the first agitation rotor, and may be less than a second distance between the rotary shaft of the second planet rotor and the rotary shaft of the first agitation rotor.

The scraper may include a silicon material.

The slurry mixer may further include a clamp coupled to the rotary shaft of the rotor of the second agitator, and fixed by a fastening member, and a coupling support at one side of the clamp, wherein the scraper is configured to be slidably coupled to the coupling support.

The scraper may protrude from an upper end of the clamp, the clamp being coupled to the coupling support.

The fastening member may be configured to be released and the clamp may be configured to be reinstalled such that a close-contact force between the scraper and the lower surface of the lid is configured to be reduced.

According to the slurry mixer according to one or more embodiments, the scraper scrapes the slurry attached to the lower surface of the lid, and the slurry is merged into the material mixture of the slurry, such that the substantial uniformity of the final composition of the slurry may be ensured. In the slurry mixer according to one or more embodiments, the scraper may scrape the active material slurry attached to the lower surface of the lid, and the active material slurry may be merged into the active material slurry, such that the substantial uniformity of the composition of the active material may be ensured.

### BRIEF DESCRIPTION OF THE DRAWINGS

FIG. 1 is an exploded perspective view of a slurry mixer according to one or more embodiments of the present disclosure.
FIG. 2 is a top plan view illustrating arrangements and operating ranges of first and second agitators of the slurry mixer in FIG. 1.
FIG. 3 is an operating state view illustrating a state in which a scraper, which is installed on a rotary shaft of a rotor configured to operate a second agitator, comes into close contact with a lower surface of a lid, and scrapes a slurry attached to the lower surface of the lid.
FIG. 4 is a perspective view illustrating a state in which the scraper is coupled to a clamp installed on the rotary shaft of the rotor configured to operate the second agitator.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. Further, "directly connected/directly coupled," or "directly on," refers to one component directly connecting or coupling another component, or being on another component, without an intermediate component.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

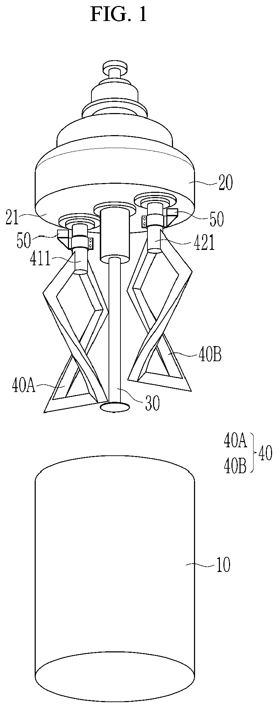

FIG. 1 is an exploded perspective view of a slurry mixer according to one or more embodiments of the present disclosure. With reference to FIG. 1, a slurry mixer according to one or more embodiments includes a container 10, a lid 20, a first agitator 30, a second agitator 40, and a scraper 50.

The container 10 provides a space in which a slurry containing a material mixture of liquid materials and a material mixture of powdered materials is accommodated, and in which a new material mixture may be inputted and mixed. The container 10 may accommodate a material mixture used to manufacture a slurry for an electrode of a secondary battery.

For example, the container 10 may be formed in a cylindrical shape, and may have a container shape open at an upper side thereof. The container 10 may have a flat horizontal bottom surface, and may have an inner peripheral surface extending substantially vertically in a cylindrical shape from an edge of the bottom surface. The container 10 may be opened and closed by the lid 20.

The lid 20 is configured to cover or leave open the opened upper side of the container 10. In one or more embodiments, the lid 20 may have a plurality of input ports through which the liquid material mixture and/or the powdered material mixture may be inputted into the container 10. The material mixtures inputted into the container 10 and the lid 20 may be substantially uniformly agitated by the first agitator 30, which rotates at relatively high speed, and the second agitator 40, which rotates at relatively low speed.

For example, the electrode of the secondary battery may be formed by coating a current collector with an active material layer. The active material layer may be formed by coating the current collector with the slurry, which contains an active material, a conductive material, a binder, and a solvent that may dissolve the binder, and by drying the slurry.

Therefore, the slurry for forming the active material layer may be suitably made by physically and substantially uniformly distributing and mixing a material mixture of liquid materials including an active material, a conductive material, a binder, a solvent, and a powdered material mixture. In one or more embodiments, the slurry mixture may suitably have material properties so that the slurry mixture may be used for the active material layer, and the slurry mixture may suitably have fluidity and viscosity suitable for coating. To this end, the first and second agitators 30 and 40 are used.

The first agitator 30 is installed on the lid 20, and is configured to distribute and mix the slurry while moving upwardly or downwardly while rotating. In comparison with the second agitator 40, the first agitator 30 implements a relatively high-speed distribution effect while rotating and moving upwardly or downwardly at a relatively high speed. A description of a corresponding shape of the first agitator 30 will be omitted.

The second agitator 40 is configured to remove the material mixture attached to an inner surface of the container 10, and to move the material mixture, which is positioned at an edge portion in the container 10, toward the center. The second agitator 40 has a vortex-forming structure. The second agitator 40 may move the material mixture toward the center, and the material mixture may be merged into the material mixture rotated at relatively high speed by the first agitator 30.

Further, in one or more embodiments, the scraper 50 may scrape the slurry attached to a lower surface 21 of the lid 20, and the slurry may be merged into the material mixture of the slurry, such that the substantial uniformity of the final composition of the slurry may be ensured. The active material layer may be formed on the electrode of the secondary battery by the slurry with a substantially uniform composition, such that the electrode performance is substantially uniformized, and the performance of the secondary battery is substantially uniformized.

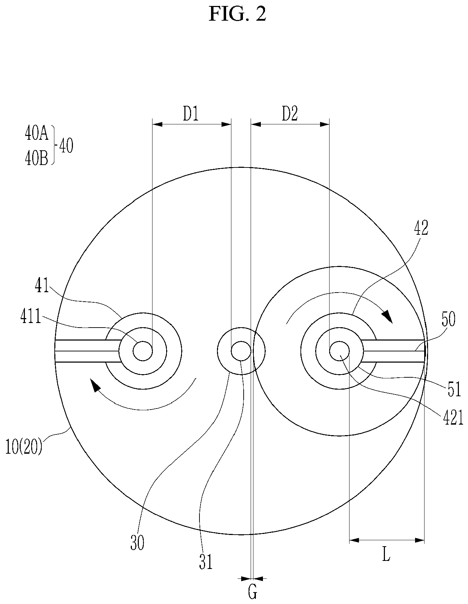

FIG. 2 is a top plan view illustrating arrangements and operating ranges of the first and second agitators of the slurry mixer in FIG. 1. With reference to FIGS. 1 and 2, the first agitator 30 is installed on a first agitation rotor 31 installed at a center of the lid 20.

Therefore, the first agitator 30 mixes and distributes the liquid material mixture and the powdered material mixture while being moved upwardly or downwardly, and while being rotated at relatively high speed at a center of the container 10 by an operation of the first agitation rotor 31.

In addition to the first agitator 30, the second agitator 40 is installed on the lid 20 at one side of the first agitator 30, and is configured to mix the slurry containing the material mixture in the container 10 while rotating and revolving at relatively low speed.

In comparison with the first agitator 30, the second agitator 40 implements a relatively strong mixing and agitating effect by means of planetary motions of twist blades while rotating at a relatively low speed. A description of a corresponding shape of the second agitator 40 will be omitted.

The second agitator 40 may include a pair of first and second planet blades 40A and 40B. The first and second planet blades 40A and 40B are respectively installed on first and second planet rotors 41 and 42 symmetrically arranged on the lid 20, and respectively provided at two opposite sides based on a diameter direction with the first agitation rotor 31 interposed therebetween.

The scraper 50 is installed on the rotary shaft of the rotor for operating the second agitator 40, and is configured to scrape the slurry attached to the lower surface 21 of the lid 20. For example, the scraper 50 may be provided as a pair of scrapers 50 respectively installed on a rotary shaft 411 of the first planet rotor 41 and on a rotary shaft 421 of the second planet rotor 42.

A length L of each of the pair of scrapers 50 may be less than a first distance D1 between the rotary shaft 411 of the first planet rotor 41 and a rotary shaft 311 of the first agitation rotor 31 (L<D1), and may be less than a second distance D2 between the rotary shaft 421 of the second planet rotor 42 and the rotary shaft 311 of the first agitation rotor 31 (L<D2).

Therefore, a gap G is formed between the scraper 50 and the rotary shaft 311 of the first agitation rotor 31. The gap G prevents interference with the rotary shaft 311 of the first agitation rotor 31 when the scraper 50 having the length L rotates and revolves.

At the same time, a contact area between the scraper 50 and the lower surface 21 of the lid 20 is increased or maximized, such that the amount of scraping the slurry attached to the lower surface 21 is increased or maximized. Therefore, a difference between the composition of the slurry and a composition set in a recipe is reduced or minimized.

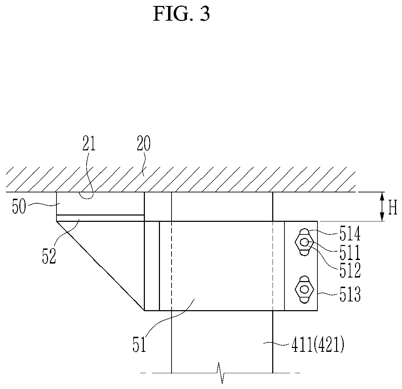

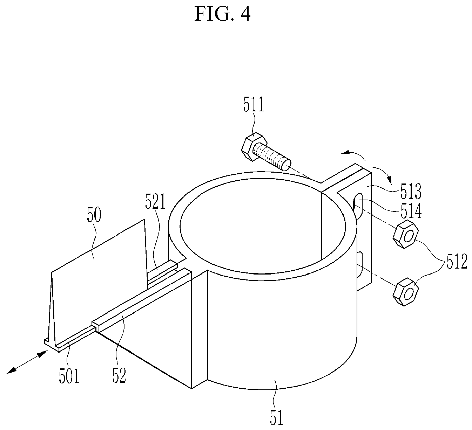

FIG. 3 is an operating state view illustrating a state in which the scraper, which is installed on the rotary shaft of the rotor configured to operate the second agitator, comes into close contact with the lower surface of the lid, and scrapes a slurry attached to the lower surface of the lid. FIG. 4 is a perspective view illustrating a state in which the scraper is coupled to a clamp installed on the rotary shaft of the rotor configured to operate the second agitator.

With reference to FIGS. 3 and 4, the slurry mixer according to one or more embodiments includes clamps 51 and coupling supports 52. The clamps 51 may be installed on the rotary shafts 411 and 421 of the rotors 41 and 42 of the second agitator 40, and may be fixed by fastening members 511 and 512. The coupling support 52 is provided at one side of the clamp 51 based on the diameter direction.

The scraper 50 may be slidably coupled to the coupling support 52 so as to scrape the lower surface 21 of the lid 20. In one or more embodiments, the coupling support 52 may have a groove 521 into which the scraper 50 is slidably inserted, and the scraper 50 may have protrusions 501 coupled to the groove 521. The groove 521 and the protrusions 501 make enable replacement of the scraper 50 when the scraper 50 is abraded.

The scraper 50 may include a silicon material. The scraper 50 may have a height H so that the scraper 50 protrudes from an upper end of the clamp 51 in a state in which the scraper 50 is coupled to the coupling support 52. The scraper 50 may have a thickness that decreases toward an end of the scraper 50. Therefore, even the abraded end of the scraper 50 may smoothly scrape the lower surface 21 of the lid 20 when the scraper 50 is reinstalled by being lifted in the event of abrasion.

In one or more embodiments, the height H of the scraper 50 is reduced because of abrasion, the fastening members 511 and 512 may be released, the clamp 51 may be lifted and reinstalled, such that the close contact between the end of the scraper 50 and the lower surface 21 of the lid 20 is reset.

The clamp 51 may have a flange 513 provided at one side thereof, and a plurality of fastening holes 514 is formed in, or defined by, the flanges 513. For example, the fastening members 511 and 512 may be configured as bolts and nuts. Therefore, the clamps 51 may be located on the rotary shafts 411 and 421, and the fastening members 511 and 512 may be fastened to the fastening holes 514 of the flanges 513, such that the clamps 51 are fixed. In one or more embodiments, the scraper 50 may be kept in close contact with the lower surface 21 of the lid 20 so as to scrape the lower surface 21 of the lid 20.

With reference back to FIGS. 1 and 2, in one or more embodiments, the slurry containing the material mixture of the liquid materials and the material mixture of the powdered materials may be accommodated in the container 10, a new material mixture may be inputted into the container 10, and the slurry may be mixed by the operations of the first and second agitators 30 and 40.

The inputted material mixtures may be distributed and mixed by the first agitator 30, which moves upwardly or downwardly, and which rotates at relatively high speed, and may be simultaneously and substantially uniformly mixed by the second agitator 40 that rotates at relatively low speed. In one or more embodiments, some of the material mixtures may be spattered and attached to the lower surface 21 of the lid 20.

In one or more embodiments, the pair of scrapers 50 scrape the slurry, which is attached to the lower surface 21 of the lid 20, as the rotary shafts 411 and 421 of the first and second planet rotors 41 and 42 rotate and revolve, such that the slurry is dropped into the container 10. The material mixture, which is scraped and merged into the slurry, makes the composition of the slurry that is substantially identical to the composition set in the recipe, or may substantially reduce or minimize a difference between the composition of the slurry and the composition set in the recipe.

With the scraper 50 described above, the active material layer may be formed on the electrode of the secondary battery by the slurry with a substantially uniform composition, such that the electrode performance is substantially uniformized, and such that the performance of the secondary battery is substantially uniformized.

While one or more embodiments of the present disclosure have been described above, the present disclosure is not limited thereto, and various modifications can be made and carried out within the scope of the claims (the functional equivalents thereof to be included therein), the detailed description of the present disclosure, and the accompanying drawings, and also fall within the scope of the present disclosure.

### Description of Some of the Reference Characters

| | | | |
|---|---|---|---|
| 10: | Container | 20: | Lid |
| 30: | First agitator | 31: | First agitation rotor |
| 40: | Second agitator | 40A, 40B: | First and second planet blades |
| 41: | First planet rotor | 42: | Second planet rotor |
| 50: | Scraper | 51: | Clamp |
| 52: | Coupling support | 411, 421: | Rotary shafts |
| 501: | Protrusion | 511, 512: | Fastening members |
| 513: | Flange | 514: | Fastening hole |
| 521: | Groove | D1: | First distance |
| D2: | Second distance | G: | Gap |
| H: | Height | L: | Length |

## Claims

1. A slurry mixer comprising:
a container (10) configured to receive a slurry comprising liquid material and powdered material;
a lid (20) configured to cover the container (10);
a first agitator (30) coupled to the lid (20), and configured to rotate to mix the slurry;
a second agitator (40) coupled to the lid (20) at one side of the first agitator (30), and configured to rotate or revolve to mix the slurry; and
a scraper (50) coupled to a rotary shaft of a rotor for operating the second agitator (40), and configured to contact a lower surface of the lid (20).

2. The slurry mixer of claim 1, wherein the first agitator (30) is coupled to a first agitation rotor at a center of the lid (20).

3. The slurry mixer of claim 1 or 2, wherein the second agitator (40) comprises a pair of first and second planet blades (40A;40B).

4. The slurry mixer of any of the claims 1 to 3, wherein the first and second planet blades (40A;40B) are respectively coupled to first and second planet rotors (41;42) symmetrically located at respective opposite sides of the lid (20) based with the first agitation rotor therebetween.

5. The slurry mixer of any of the claims 1 to 4, wherein the scraper (50) comprises a pair of scrapers respectively coupled to a rotary shaft (411) of the first planet rotor (41) and to a rotary shaft (421) of the second planet rotor (42).

6. The slurry mixer of any of the claims 1 to 5, wherein a length of each of the scrapers is less than a first distance between the rotary shaft (411) of the first planet rotor (41) and a rotary shaft of the first agitation rotor (31), and is less than a second distance between the rotary shaft (421) of the second planet rotor (42) and the rotary shaft of the first agitation rotor (31).

7. The slurry mixer of any of the claims 1 to 6, wherein the scraper (50) comprises a silicon material.

8. The slurry mixer of any of the claims 1 to 7, further comprising:
a clamp (51) coupled to the rotary shaft of the rotor of the second agitator (40), and fixed by a fastening member (511); and
a coupling support (52) at one side of the clamp (51),
wherein the scraper (50) is configured to be slidably coupled to the coupling support (52).

9. The slurry mixer of any of the claims 1 to 8, wherein the scraper (50) protrudes from an upper end of the clamp (51), the clamp being coupled to the coupling support (52).

10. The slurry mixer of any of the claims 1 to 9, wherein the fastening member (511) is configured to be released and the clamp (51) is configured to be reinstalled such that a close-contact force between the scraper (50) and the lower surface of the lid (20) is configured to be reduced.
